# FASCICULE DE BREVET EUROPEEN

(11) **EP 3 390 076 B1**
(45) Date de publication et mention de la délivrance du brevet: **09.09.2020**
(21) Numéro de dépôt: 16819625.1
(22) Date de dépôt: 14.12.2016
(51) Int. Cl.: B60C 9/20, B60C 11/12, B60C 11/03, B60C 9/22

(54) **PNEUMATIQUE PRÉSENTANT DES PROPRIÉTÉS D'USURE AMÉLIORÉES**
REIFEN MIT VERBESSERTEN ABNUTZUNGSEIGENSCHAFTEN
TYRE HAVING IMPROVED WEAR PROPERTIES

(30) Priorité: 16.12.2015 FR 1562476
(43) Date de publication de la demande: 24.10.2018
(73) Titulaire: Compagnie Générale des Etablissements Michelin, 63000 Clermont-Ferrand (FR)
(72) Inventeur: GERVAIS, Philippe, 63040 Clermont-Ferrand Cedex 9 (FR); GODEAU, Gilles, 63040 Clermont-Ferrand Cedex 9 (FR); QUANTINET, Benjamin, 63040 Clermont-Ferrand Cedex 9 (FR); ZIVKOVIC, Tony, 63040 Clermont-Ferrand Cedex 9 (FR)
(74) Mandataire: Le Cam, Stéphane Georges Elie
(86) Numéro de dépôt international: PCT/FR2016/053375
(87) Numéro de publication internationale: WO 2017/103431

(56) Documents cités:
- WO-A1-2013/053877
- WO-A1-2015/114128

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Il est notamment connu d'introduire une couche de mélange caoutchouteux entre les extrémités des couches de travail pour créer un découplage entre lesdites extrémités pour limiter les contraintes de cisaillement. De telles couches de découplage doivent toutefois présenter une très bonne cohésion. De telles couches de mélanges caoutchouteux sont par exemple décrites dans la demande de brevet WO 2004/076204.

Les pneumatiques ainsi réalisés permettent effectivement d'améliorer les performances notamment en termes d'endurance.

Par ailleurs, il est connu pour réaliser des pneumatiques à bande de roulement très large ou bien pour conférer à des pneumatiques d'une dimension donnée des capacités de charges plus importantes d'introduire une couche d'éléments de renforcement circonférentiels. La demande de brevet WO 99/24269 décrit par exemple la présence d'une telle couche d'éléments de renforcement circonférentiels.

La couche d'éléments de renforcement circonférentiels est usuellement constituée par au moins un câble métallique enroulé pour former une spire dont l'angle de pose par rapport à la direction circonférentielle est inférieur à 2.5°.

Le document WO 2013/053877 décrit encore un pneumatique comportant une couche d'éléments de renforcement circonférentiels associée à des deux couches de travail.

En combinaison avec cette structure interne de pneu, il est connu de pourvoir la bande de roulement, c'est-à-dire la partie du pneu destinée à venir en contact avec le sol lors du roulage et à s'user lors du roulage, d'une sculpture formée d'éléments de relief délimités par des rainures qu'elles soient d'orientation circonférentielle, transversale ou oblique. L'objectif d'une telle sculpture est de conférer à la bande de roulement de bonnes performances en roulage sur chaussée sèche et sur chaussée revêtue d'eau notamment par temps de pluie.

Pour améliorer les performances des bandes de roulement sans toutefois trop abaisser les rigidités de cisaillement desdites bandes, il est connu de former sur la surface de roulement une pluralité d'arêtes orientées transversalement ou en oblique afin de couper la pellicule d'eau sur une chaussée pour assurer un bon contact entre la bande de roulement et la chaussée. Un moyen d'obtention de telles arêtes consiste à pourvoir la bande avec une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneumatique.

Combiné à ce besoin d'améliorer la performance d'adhérence par la présence d'arêtes formées par les découpures transversales, il est également requis que les performances d'une bande de roulement soient pérennes, c'est-à-dire que des performances satisfaisantes soient atteintes même après une usure partielle plus ou moins avancée. Par usure partielle d'une bande de roulement, on entend un état d'usure correspondant à une épaisseur de bande de roulement au plus égale à l'épaisseur totale de bande pouvant être usée avant de devoir changer le pneu notamment pour des raisons de réglementation.

La demande de brevet WO 02/38399-A2 décrit une bande de roulement pour pneu de véhicule poids lourd, cette bande de roulement comprenant une pluralité de rainures circonférentielles et transversales. Les rainures transversales sont formées d'une alternance de zones en creux et d'incisions de façon à avoir un volume de creux s'ouvrant sur la surface de roulement à l'état neuf et un volume de creux cachés, ces creux cachés étant destinés à s'ouvrir après une usure partielle de la même bande de roulement. La présence de creux cachés - apparaissant avec l'usure, permet d'avoir une plus grande rigidité à l'état initial tout en assurant une performance d'adhérence quel que soit le niveau d'usure de la bande.

Le document WO 2015/114128 décrit par exemples des découpures d'orientation longitudinale dont le ratio de la largeur mesurée au fond de la découpure sur la largeur mesurée en surface de la bande de roulement est supérieur à 2.

Lors d'essais, les inventeurs ont mis en évidence que la présence de certains types de découpures longitudinales comportant des creux cachés pouvait conduire à une dégradation des performances en termes d'usure, avec l'apparition de formes d'usures irrégulières selon la direction transversale, en comparaison de pneumatiques similaires ne comportant pas de tels creux cachés pour des usages identiques.

Un but de l'invention est de fournir des pneumatiques dont les propriétés d'usure et plus spécifiquement de régularité d'usure selon la direction transversale sont conservées ou améliorées quel que soit l'usage, pour ces types de découpures longitudinales comportant des creux cachés présents sur la bande de roulement.

Ce but est atteint selon l'invention par un pneumatique à armature de carcasse radiale comprenant une armature de sommet formée d'au moins deux couches de sommet de travail d'éléments de renforcement, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels, ladite bande de roulement comportant une surface de roulement destinée à venir en contact avec une chaussée et former une surface de contact, ladite bande de roulement étant constituée d'au moins une partie centrale s'étendant au moins dans la zone du plan équatorial et deux parties axialement extérieures et présentant au moins dans ladite partie centrale au moins une découpure d'orientation longitudinale, la profondeur, mesurée sur pneumatique neuf dans au moins ladite partie centrale, de ladite au moins une découpure d'orientation longitudinale étant supérieure ou égale à 40 % de l'épaisseur de la bande roulement et le ratio de la largeur mesurée au fond de ladite au moins une découpure d'orientation longitudinale sur la largeur mesurée en surface de la bande de roulement sur pneumatique neuf de ladite au moins une découpure d'orientation longitudinale étant supérieur à 2.

Au sens de l'invention, une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Au sens de l'invention, une découpure d'orientation longitudinale est une découpure dont le plan moyen d'au moins une partie des parois de ladite découpure forme un angle avec un plan longitudinal inférieur à 10°. Cet angle formé avec un plan longitudinal peut être orienté dans un sens ou dans l'autre par rapport audit plan longitudinal. Une découpure d'orientation longitudinale peut encore être une découpure dont les parois ondulent ou zigzaguent autour d'un plan moyen tel qu'il vient d'être décrit.

Au sens de l'invention, la profondeur d'une découpure est la distance radiale mesurée sur un pneumatique neuf entre la surface de la bande de roulement et le point radialement le plus intérieur de ladite découpure.

Au sens de l'invention, l'épaisseur de la bande roulement, mesurée dans une coupe radiale du pneumatique, est la distance mesurée sur pneumatique neuf entre un point de la surface de la bande de roulement et la projection orthogonale dudit point sur la surface radialement extérieure de l'armature de sommet.

La largeur entre les parois d'une découpure est mesurée sur pneumatique neuf, dans un plan de coupe perpendiculaire au plan moyen des parois et au plan tangent à la surface de la bande de roulement. Elle est mesurée selon une direction parallèle au plan tangent à la surface de la bande de roulement.

Au sens de l'invention, la largeur entre les parois d'une découpure en surface de la bande de roulement correspond à la mesure la plus petite dans la partie radialement extérieure de la découpure et plus exactement à la mesure la plus petite réalisée dans une zone comprise radialement entre un point radialement le plus extérieur de ladite découpure et un point situé à une distance de la surface de la bande de roulement égale à 30 % de la profondeur de ladite découpure.

Au sens de l'invention, une mesure au fond d'une découpure correspond à la mesure la plus grande dans la partie radialement intérieure de la découpure et plus exactement à la mesure la plus grande réalisée dans une zone comprise radialement entre le point radialement le plus intérieur de ladite découpure et un point située à une distance de la surface de la bande de roulement égale à 25% de la profondeur de ladite découpure.

La partie centrale de la bande de roulement s'étendant au moins dans la zone du plan équatorial présente avantageusement selon l'invention une largeur axiale au moins aussi grande que celle de la couche d'éléments de renforcement circonférentiels.

Les essais réalisés ont montré que les pneumatiques selon l'invention présentent des performances d'usure et notamment de régularité d'usure satisfaisantes quelles que soient les conditions d'utilisation des pneumatiques.

Les inventeurs ont en effet su mettre en évidence que des découpures d'orientation longitudinale dont la profondeur est supérieure à 40 % de l'épaisseur de la bande roulement et dont le ratio de la largeur mesurée au fond desdites découpures d'orientation longitudinale sur la largeur mesurée en surface de la bande de roulement desdites découpures d'orientation longitudinale est supérieur à 2 conduisent à une déformation locale de l'armature de sommet lors de la fabrication du pneumatique et notamment lors de la cuisson de celui-ci. Les inventeurs pensent interpréter cette déformation de l'armature sommet du fait d'un fluage des matériaux élastomériques non maîtrisés au niveau desdites découpures lors du moulage et de la cuisson dudit pneumatique. Cela se traduirait vraisemblablement par une déformation selon la direction radiale des couches constitutives de l'armature de sommet localisées à proximité desdites découpures. Ces déformations pourraient conduire lors de l'usage des pneumatiques à une altération des performances du pneumatique en termes d'usure et notamment de régularité d'usure, l'épaisseur de mélange à user n'étant pas régulière selon la direction transversale du pneumatique.

La présence de la couche d'éléments de renforcement circonférentiels conformément à l'invention permet de limiter voire de prévenir ces phénomènes d'usures irrégulières selon la direction transversale.

Les inventeurs pensent interpréter les résultats obtenus avec les pneumatiques selon l'invention par la présence d'une couche d'éléments de renforcement circonférentiels qui semble pouvoir diminuer voir éviter lesdites déformations locales de l'armature de sommet lors de la cuisson de pneumatiques comportant des découpures d'orientation longitudinale dont la profondeur est supérieure ou égale à 40 % de l'épaisseur de la bande roulement et dont le ratio de la largeur mesurée au fond des découpures d'orientation longitudinale sur la largeur mesurée en surface de la bande de roulement des découpures d'orientation longitudinale est supérieur à 2.

De manière très surprenante, la couche d'éléments de renforcement circonférentiels, qui est usuellement présente pour limiter des effets de cisaillement entre les couches de sommet de travail, semble permettre une meilleure maîtrise des déplacements des mélanges formant la bande roulement lors de la cuisson d'un pneumatique, celui-ci comportant des découpures d'orientation longitudinale dont la profondeur est supérieure ou égale à 40 % de l'épaisseur de la bande roulement et dont le ratio de la largeur mesurée au fond des découpures d'orientation longitudinale sur la largeur mesurée en surface de la bande de roulement des découpures d'orientation longitudinale est supérieur à 2.

Selon une variante préférée de l'invention, la découpure présente un ratio de la largeur mesurée au fond de ladite au moins une découpure d'orientation longitudinale sur la largeur de la ladite au moins une découpure d'orientation longitudinale mesurée en surface de la bande de roulement sur pneumatique neuf supérieur à 2 sur toute sa longueur.

Selon une autre variante de l'invention, cette condition sur le ratio de la largeur mesurée au fond de ladite au moins une découpure d'orientation longitudinale sur la largeur de la ladite au moins une découpure d'orientation longitudinale mesurée en surface de la bande de roulement sur pneumatique neuf supérieur à 2 peut n'être vérifiée que sur une partie de la longueur de la découpure.

Selon encore d'autres variantes de l'invention, cette condition sur le ratio de la largeur mesurée au fond de ladite au moins une découpure d'orientation longitudinale sur la largeur de la ladite au moins une découpure d'orientation longitudinale mesurée en surface de la bande de roulement sur pneumatique neuf supérieur à 2 peut être vérifiée par intermittence sur la longueur de la découpure.

Selon un mode de réalisation préféré de l'invention, la largeur mesurée au fond de ladite au moins une découpure d'orientation longitudinale est strictement supérieure à 3 mm.

De préférence encore, la largeur mesurée au fond de ladite au moins une découpure d'orientation longitudinale est inférieure à 10 mm.

Avantageusement selon l'invention, le taux d'entaillement volumique de la bande de roulement du pneumatique selon l'invention est inférieur ou égal à 15 %, de préférence inférieur ou égal à 13 % et de préférence encore supérieur à 5 %.

Le taux d'entaillement volumique de la bande de roulement est défini selon l'invention sur pneumatique neuf par le rapport du volume de découpures sur le volume total de la bande de roulement. Le volume total de la bande de roulement est quant à lui défini au sens de l'invention par le volume, incluant le volume de toutes les découpures, évalué entre la surface de roulement et une surface parallèle à cette surface de roulement passant par le fond du creux s'étendant le plus à l'intérieur de la bande.

Selon un mode de réalisation avantageux de l'invention, la couche de sommet de travail axialement la plus large est radialement à l'intérieur des autres couches de sommet de travail.

Selon une variante avantageuse de réalisation de l'invention, la couche d'éléments de renforcement circonférentiels présente une largeur axiale supérieure à 0.5xW.

W est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préférée de l'invention, une couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par une couche C de mélange de caoutchouc au moins sur le restant de la largeur commune aux dites deux couches de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

Avantageusement selon l'invention, l'armature de sommet est formée d'au moins deux couches de sommet de travail d'éléments de renforcement, croisés d'une couche à l'autre en faisant avec la direction circonférentielle des angles compris entre 10° et 45°.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique selon l'invention,
- figure 2, une vue en projection d'un schéma d'une partie de la surface d'une bande de roulement d'un pneumatique selon l'invention,
- figure 3, une vue en coupe selon le plan de coupe P d'une découpure selon un mode de réalisation de l'invention.

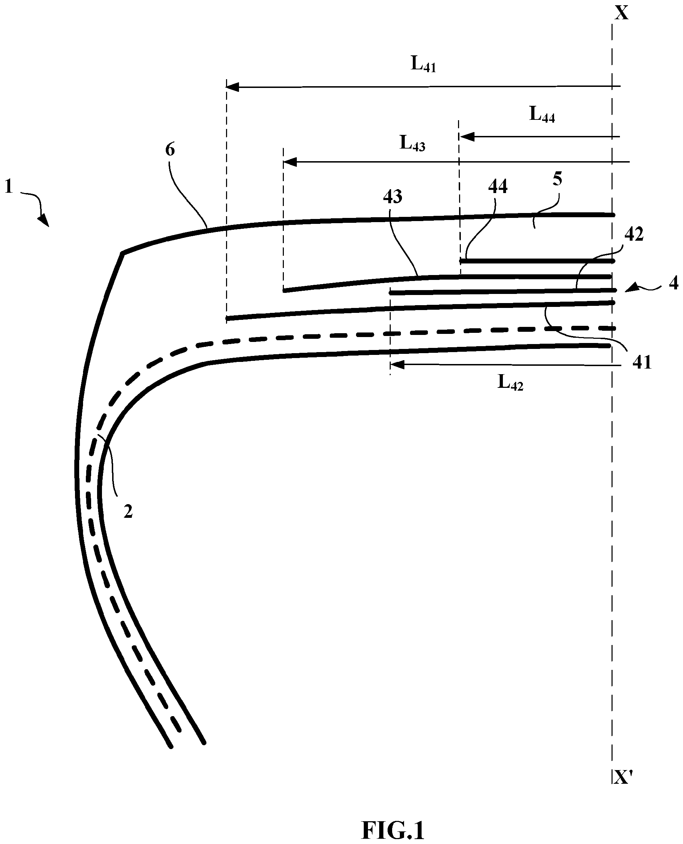

Les figures ne sont pas représentées à l'échelle pour en simplifier la compréhension. La figure 1 ne représente qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5, a un rapport de forme H/S égal à 0, 70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :
- d'une première couche de travail 41 formée de câbles métalliques inextensibles 9.28 non frettés, continus sur toute la largeur de la nappe, orientés d'un angle égal à 24°,
- d'une couche d'éléments de renforcement circonférentiels 42 formée de câbles métalliques en acier 21x23, de type "bi-module",
- d'une seconde couche de travail 43 formée de câbles métalliques inextensibles 9.28 non frettés, continus sur toute la largeur de la nappe, orientés d'un angle égal à 24° et croisés avec les câbles métalliques de la couche 41,
- d'une couche de protection 44 formées de câbles métalliques élastiques 6.35.

L'armature de sommet est elle-même coiffée d'une bande de roulement 6.

La largeur axiale maximale W du pneumatique est égale à 317 mm.

La largeur axiale L₄₁ de la première couche de travail 41 est égale à 252 mm.

La largeur axiale L₄₃ de la deuxième couche de travail 43 est égale à 232 mm.

Quant à la largeur axiale L₄₂ de la couche d'éléments de renforcement circonférentiels 42, elle est égale à 194 mm.

La dernière nappe de sommet 44, dite de protection, a une largeur L₄₄ égale à 124 mm.

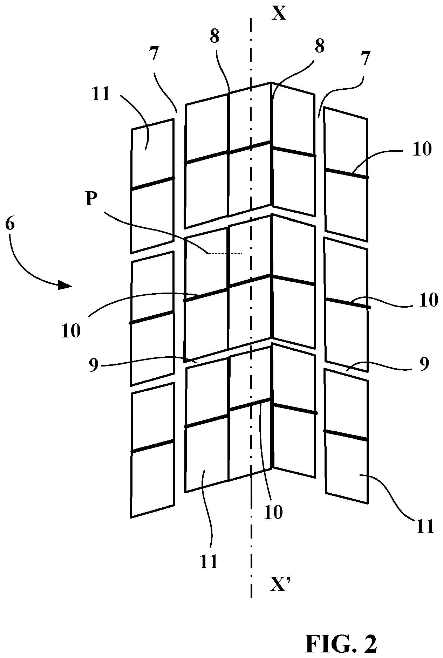

La figure 2 illustre une vue en projection d'un schéma d'une partie de la surface 6 d'une bande de roulement 5 d'un pneumatique 1. La surface 6 de la bande de roulement 5 est formée de découpures longitudinales 7 et 8, et de découpures transversales 9 et 10. Les découpures longitudinales 7 et transversales 9 sont des rainures et les découpures longitudinales 8 et transversales 10 sont des incisions. L'ensemble de ces découpures 7, 8, 9 et 10 forment les éléments de sculptures 11 constituant la bande de roulement 5.

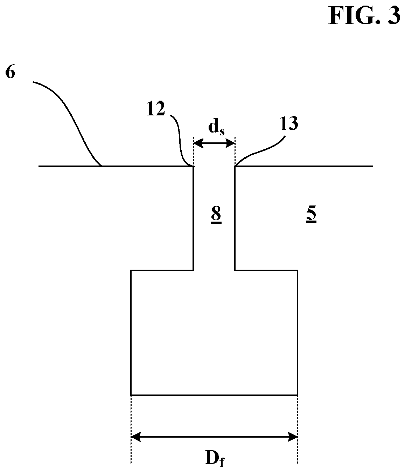

Sur la figure 3, est représentée schématiquement une découpure longitudinale 8 en coupe selon le plan de coupe P. Ce plan de coupe P est perpendiculaire au plan moyen des parois et au plan tangent à la surface 6 de la bande de roulement 5. La largeur D_{f} de la découpure 8 en fond de découpure est égale à 6 mm. La largeur dₛ de la découpure longitudinale 8 en surface de la bande de roulement 5 est mesurée entre les extrémités 12 et 13 de ladite découpure longitudinale 8 en surface 6 de la bande de roulement 5. Elle est égale à 0.7 mm. Le ratio D_{f}/ dₛ est égal à 8.57.

Dans le cas de la figure 3, la découpure 8 forme une incision en surface de la bande de roulement qui conformément à la définition donnée précédemment présente une largeur inférieure à 2 mm. Après usure de la bande de roulement, le creux caché sous ladite incision fait apparaître une rainure. Comme expliqué précédemment, lorsque le pneumatique est neuf, l'incision permet de former des arêtes tout en conservant une rigidité de la bande de roulement importante, les parois venant au contact l'une de l'autre au moment du contact avec le sol. Après usure, lorsque le creux caché apparaît il forme une rainure et donc des arêtes, la perte de rigidité étant limitée du fait de la profondeur de la découpure moins importante dans la bande de roulement.

Des essais ont été réalisés avec des pneumatiques selon l'invention et des pneumatiques de référence.

Ces essais ont consistés en des roulages simulant un usage moyen des pneumatiques lorsqu'ils équipent des véhicules de type Poids lourds. Le but de ces essais est de contrôler l'état des pneumatiques au cours des roulages et d'identifier d'éventuels problèmes d'irrégularités d'usure de la bande de roulement.

Les pneumatiques selon l'invention sont réalisés conformément aux figures 1 à 3.

Les pneumatiques de référence sont conformes aux figures 2 et 3, et leur architecture sommet diffère en ce que l'armature sommet ne comporte pas de couche d'éléments de renforcement circonférentiels.

Au cours des roulages, les pneumatiques de référence font apparaître des irrégularités d'usure selon la direction transversale. De telles irrégularités d'usure peuvent dans certaines conditions avoir des effets négatifs sur les propriétés d'adhérence du pneumatique car la surface de l'aire de contact peut s'en trouver modifiée. Ces irrégularités d'usure peuvent également générer des vibrations, perceptibles par l'usager et donc une situation d'inconfort pour celui-ci. En outre, l'apparition de telles irrégularités d'usure conduit à une augmentation de la vitesse d'usure des pneumatiques et donc une durée d'utilisation moindre qu'espérée.

Concernant les pneumatiques selon l'invention, les essais montrent que de telles irrégularités d'usure apparaissent plus tardivement et de manière beaucoup moins prononcée de sorte que les propriétés d'adhérence ne sont quasiment pas affectée quelles que soient les conditions de roulage.

## Revendications

1. Pneumatique (1) à armature de carcasse radiale (2) comprenant une armature de sommet (4) formée d'au moins deux couches de sommet de travail (41, 43) d'éléments de renforcement, elle-même coiffée radialement d'une bande de roulement (5), ladite bande de roulement étant réunie à deux bourrelets par l'intermédiaire de deux flancs, l'armature de sommet (4) comportant au moins une couche d'éléments de renforcement circonférentiels (42), ladite bande de roulement comportant une surface de roulement (6) destinée à venir en contact avec une chaussée et former une surface de contact, **caractérisé en ce que** ladite bande de roulement est constituée d'au moins une partie centrale s'étendant au moins dans la zone du plan équatorial (XX') et deux parties axialement extérieures et présente au moins dans ladite partie centrale au moins une découpure d'orientation longitudinale (7, 8) délimitée par des parois de matière se faisant face et dont le plan moyen d'au moins une partie des parois de ladite au moins une découpure forme un angle avec un plan longitudinal inférieur à 10°, **en ce que** la profondeur, mesurée sur pneumatique neuf dans au moins ladite partie centrale, de ladite au moins une découpure d'orientation longitudinale (7, 8) est supérieure ou égale à 40 % de l'épaisseur de la bande roulement (5) et **en ce que** le ratio de la largeur (D_{f}) mesurée au fond de ladite au moins une découpure d'orientation longitudinale (8) sur la largeur (dₛ) mesurée en surface (6) de la bande de roulement sur pneumatique neuf de ladite au moins une découpure d'orientation longitudinale (8) est supérieur à 2.

2. Pneumatique (1) selon la revendication 1, **caractérisé en ce que** la largeur (D_{f}) mesurée au fond de ladite au moins une découpure d'orientation longitudinale (8) est strictement supérieure à 3 mm.

3. Pneumatique (1) selon la revendication 2, **caractérisé en ce que** la largeur (D_{f}) mesurée au fond de ladite au moins une découpure d'orientation longitudinale (8) est inférieure à 10 mm.

4. Pneumatique (1) selon l'une des revendications 1 à 3, **caractérisé en ce que** la couche d'éléments de renforcement circonférentiels (42) est radialement disposée entre deux couches de sommet de travail (41, 43).

5. Pneumatique (1) selon l'une des revendications 1 à 4, **caractérisé en ce que** les largeurs axiales des couches de sommet de travail (41, 43) radialement adjacentes à la couche d'éléments de renforcement circonférentiels (42) sont supérieures à la largeur axiale de ladite couche d'éléments de renforcement circonférentiels (42).

6. Pneumatique (1) selon la revendication 5, **caractérisé en ce que** les couches de sommet de travail (41, 43) adjacentes à la couche d'éléments de renforcement circonférentiels (42) sont de part et d'autre du plan équatorial (XX') et dans le prolongement axial immédiat de la couche d'éléments de renforcement circonférentiels (42) couplées sur une largeur axiale, pour être ensuite découplées par des profilés de mélange de caoutchouc au moins sur le restant de la largeur commune aux dites deux couches de travail.

7. Pneumatique (1) selon l'une des revendications précédentes, **caractérisé en ce que** l'armature de sommet (4) est formée d'au moins deux couches de sommet de travail (41, 43) d'éléments de renforcement, de préférence inextensibles, croisés d'une couche à l'autre en faisant avec la direction circonférentielle des angles compris entre 10° et 45°.

8. Pneumatique (1) selon l'une des revendications précédentes, **caractérisé en ce que** les éléments de renforcement d'au moins une couche d'éléments de renforcement circonférentiels (42) sont des éléments de renforcement métalliques présentant un module sécant à 0,7 % d'allongement compris entre 10 et 120 GPa et un module tangent maximum inférieur à 150 GPa.

9. Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement dits élastiques, orientés par rapport à la direction circonférentielle avec un angle compris entre 10° et 45° et de même sens que l'angle formé par les éléments inextensibles de la nappe de travail (43) qui lui est radialement adjacente.

10. Pneumatique (1) selon l'une des revendications précédentes, **caractérisé en ce que** l'armature de sommet (4) comporte en outre une couche de triangulation formée d'éléments de renforcement métalliques faisant avec la direction circonférentielle des angles supérieurs à 45°.

## Patentansprüche

1. Reifen (1) mit radialer Karkassenbewehrung (2), welcher eine Scheitelbewehrung (4) umfasst, die von wenigstens zwei Arbeitsscheitelschichten (41, 43) von Verstärkungselementen gebildet wird und ihrerseits radial von einem Laufstreifen (5) bedeckt wird, wobei der Laufstreifen über zwei Seitenwände mit zwei Wülsten verbunden ist, wobei die Scheitelbewehrung (4) wenigstens eine Schicht von Umfangsverstärkungselementen (42) aufweist, wobei der Laufstreifen eine Lauffläche (6) aufweist, die dazu bestimmt ist, mit einer Fahrbahn in Kontakt zu kommen und eine Kontaktfläche zu bilden,
**dadurch gekennzeichnet, dass** der Laufstreifen aus wenigstens einem mittleren Teil, der sich wenigstens im Bereich der Äquatorialebene (XX') erstreckt, und zwei axial äußeren Teilen besteht und wenigstens in dem mittleren Teil wenigstens einen längs ausgerichteten Ausschnitt (7, 8) aufweist, der von einander zugewandten Materialwänden begrenzt wird und dessen Mittelebene wenigstens eines Teils der Wände des wenigstens einen Ausschnitts einen Winkel mit einer Längsebene bildet, der kleiner als 10° ist, dadurch, dass die Tiefe des wenigstens einen längs ausgerichteten Ausschnitts (7, 8), gemessen an einem neuen Reifen in wenigstens dem mittleren Teil, größer oder gleich 40 % der Dicke des Laufstreifens (5) ist, und dadurch, dass das Verhältnis der am Boden gemessenen Breite (D_{f}) des wenigstens einen längs ausgerichteten Ausschnitts (8) zur an der Oberfläche (6) des Laufstreifens am neuen Reifen gemessenen Breite (dₛ) des wenigstens einen längs ausgerichteten Ausschnitts (8) größer als 2 ist.

2. Reifen (1) nach Anspruch 1, **dadurch gekennzeichnet, dass** die am Boden gemessene Breite (D_{f}) des wenigstens einen längs ausgerichteten Ausschnitts (8) streng größer als 3 mm ist.

3. Reifen (1) nach Anspruch 2, **dadurch gekennzeichnet, dass** die am Boden gemessene Breite (D_{f}) des wenigstens einen längs ausgerichteten Ausschnitts (8) kleiner als 10 mm ist.

4. Reifen (1) nach einem der Ansprüche 1 bis 3, **dadurch gekennzeichnet, dass** die Schicht von Umfangsverstärkungselementen (42) radial zwischen zwei Arbeitsscheitelschichten (41, 43) angeordnet ist.

5. Reifen (1) nach einem der Ansprüche 1 bis 4, **dadurch gekennzeichnet, dass** die axialen Breiten der Arbeitsscheitelschichten (41, 43), die der Schicht von Umfangsverstärkungselementen (42) radial benachbart sind, größer als die axiale Breite der Schicht von Umfangsverstärkungselementen (42) sind.

6. Reifen (1) nach Anspruch 5, **dadurch gekennzeichnet, dass** die Arbeitsscheitelschichten (41, 43), die der Schicht von Umfangsverstärkungselementen (42) benachbart sind, beiderseits der Äquatorialebene (XX') und in der unmittelbaren axialen Verlängerung der Schicht von Umfangsverstärkungselementen (42) auf einer axialen Breite gekoppelt sind, um anschließend durch Profilteile aus Kautschukmischung wenigstens auf dem restlichen Teil der gemeinsamen Breite der zwei Arbeitsschichten entkoppelt zu sein.

7. Reifen (1) nach einem der vorhergehenden Ansprüche, **dadurch gekennzeichnet, dass** die Scheitelbewehrung (4) von wenigstens zwei Arbeitsscheitelschichten (41, 43) von Verstärkungselementen gebildet wird, die vorzugsweise nicht dehnbar sind und sich von einer Schicht zur anderen überkreuzen, wobei sie mit der Umfangsrichtung Winkel zwischen 10° und 45° bilden.

8. Reifen (1) nach einem der vorhergehenden Ansprüche, **dadurch gekennzeichnet, dass** die Verstärkungselemente wenigstens einer Schicht von Umfangsverstärkungselementen (42) metallische Verstärkungselemente sind, die einen Sekantenmodul bei 0,7 % Dehnung zwischen 10 und 120 GPa und einen maximalen Tangentenmodul von weniger als 150 GPa aufweisen.

9. Reifen (1) nach einem der vorhergehenden Ansprüche, **dadurch gekennzeichnet, dass** die Scheitelbewehrung (4) radial außen durch wenigstens eine zusätzliche Lage (44), Schutzlage genannt, von sogenannten elastischen Verstärkungselementen ergänzt wird, die in Bezug auf die Umfangsrichtung mit einem Winkel zwischen 10° und 45° ausgerichtet sind, der dieselbe Richtung wie der Winkel hat, der von den nicht dehnbaren Elementen der Arbeitslage (43) gebildet wird, welche ihr radial benachbart ist.

10. Reifen (1) nach einem der vorhergehenden Ansprüche, **dadurch gekennzeichnet, dass** die Scheitelbewehrung (4) außerdem eine Triangulationsschicht aufweist, die von metallischen Verstärkungselementen gebildet wird, die mit der Umfangsrichtung Winkel bilden, die größer als 45° sind.

## Claims

1. Tyre (1) having a radial carcass reinforcement (2) comprising a crown reinforcement (4) formed of at least two working crown layers (41, 43)of reinforcing elements, said crown reinforcement being capped radially with a tread (5), said tread being joined to two beads via two sidewalls, the crown reinforcement (4) comprising at least one layer of circumferential reinforcing elements (42), said tread comprising a tread surface (6) intended to come into contact with a road surface and form a contact surface, **characterized in that** said tread consists of at least one central part extending at least in the region of the equatorial plane (XX') and two axially exterior parts and has, at least in said central part, at least one longitudinally-oriented cut (7, 8), delimited by walls of material that face one another and in which the mean plane of at least a portion of the walls of said at least one cut forms an angle with a longitudinal plane of less than 10°, **in that** the depth, measured on a new tyre in at least said central part, of said at least one longitudinally-oriented cut (7, 8), is greater than or equal to 40% of the thickness of the tread, and **in that** the ratio of the width (D_{f}) measured at the bottom of said at least one longitudinally-oriented cut (8) to the width (dₛ) measured at the surface of the tread on a new tyre of said at least one longitudinally-oriented cut (8) is greater than 2.

2. Tyre (1) according to Claim 1, **characterized in that** the width (D_{f}) measured at the bottom of said at least one longitudinally-oriented cut (8) is strictly greater than 3 mm.

3. Tyre (1) according to Claim 2, **characterized in that** the width (D_{f}) measured at the bottom of said at least one longitudinally-oriented cut (8) is less than 10 mm.

4. Tyre (1) according to one of Claims 1 to 3, **characterized in that** the layer of circumferential reinforcing elements (42) is radially arranged between two working crown layers (41, 43).

5. Tyre (1) according to one of Claims 1 to 4, **characterized in that** the axial widths of the working crown layers (41, 43) radially adjacent to the layer of circumferential reinforcing elements (42) are greater than the axial width of said layer of circumferential reinforcing elements (42).

6. Tyre (1) according to Claim 5, **characterized in that** the working crown layers (41, 43) adjacent to the layer of circumferential reinforcing elements (42) are coupled over an axial width, on either side of the equatorial plane (XX') and in the immediate axial extension of the layer of circumferential reinforcing elements (42), and are subsequently decoupled by profiled elements of rubber mixture at least over the remainder of the width common to said two working layers.

7. Tyre (1) according to one of the preceding claims, **characterized in that** the crown reinforcement (4) is formed of at least two working crown layers (41, 43) of reinforcing elements, preferably inextensible, crossed from one layer to the other, forming, with the circumferential direction, angles of between 10° and 45°.

8. Tyre (1) according to one of the preceding claims, **characterized in that** the reinforcing elements of at least one layer of circumferential reinforcing elements (42) are metal reinforcing elements having a secant modulus at 0.7% elongation of between 10 and 120 GPa and a maximum tangent modulus of less than 150 GPa.

9. Tyre (1) according to one of the preceding claims, **characterized in that** the crown reinforcement (4) is supplemented radially on the outside by at least one additional ply (44), referred to as a protective ply, of reinforcing elements, referred to as elastic reinforcing elements, that are oriented relative to the circumferential direction at an angle of between 10° and 45° and in the same direction as the angle formed by the inextensible elements of the working ply (43) which is radially adjacent thereto.

10. Tyre (1) according to one of the preceding claims, **characterized in that** the crown reinforcement (4) also comprises a triangulation layer formed of metal reinforcing elements that form angles of more than 45° with the circumferential direction.
